# EUROPEAN PATENT APPLICATION

(11) **EP 4 764 377 A1**
(43) Date of publication of application: **24.06.2026**
(21) Application number: 24307280.8
(22) Date of filing: 23.12.2024
(51) Int. Cl.: F25J 1/02, H01M 8/04014, H01M 8/04007, H01M 8/04119, H01M 8/0668, H01M 8/124, H01M 8/12

(54) **CAPTURED CARBON LIQUEFICATION COOLING USING FUEL CELL HEAT RECOVERY**

(71) Applicant: Technip Energies France, 92741 Nanterre Cedex (FR)
(72) Inventor: PAWAR, Dhairyasheel, 92741 Nanterre Cedex (FR)
(74) Representative: Edson, Russell Gregory

(57) **Abstract**

A system and method of generating electrical energy using a fuel cell while decarbonizing an exhaust gas generated by the fuel cell is disclosed. Heat generated by an electrochemical reaction within the fuel cell can be recovered at both an anode side and a cathode side of the fuel cell, and at least some of the recovered heat can be used to preheat each of a fuel feed and an oxidant supplied to the fuel cell. A carbon capture system may be included and used to capture and liquefy carbon dioxide present in an anodic exhaust gas emitted by the fuel cell. At least a liquefaction subsystem of the carbon capture system may receive a cooled refrigerant from a vapor absorption and refrigeration device that cools the refrigerant using heat extracted from heat transfer fluid heated by recovered heat from the anodic exhaust gas and a cathodic exhaust gas.

## Description

### Technical Field

The present disclosure relates generally to fuel cell powered electrical energy generation, and more particularly although not necessarily exclusively, to decarbonizing a fuel cell powered electrical energy generation process.

### Background

Fuel cells, including high temperature fuel cells such as solid oxide fuel cells (SOFC) or protonic ceramic fuel cells (PCFCs), may be usable as a mechanism for producing electrical energy. Electrical energy produced via fuel cells may be used, for example, in onshore applications such as industrial processes or in offshore applications such as maritime transportation applications. When used to generate electrical energy, such fuel cells may be operated using a number of different fuels including, for example, liquefied natural gas (LNG), ammonia, and methane. Fuel cell based electrical energy generation plants may, at least in some cases, operate with a higher efficiency than conventional coal or gas fired electrical energy generation plants. As the process of generating electrical energy using fuel cells produces carbon dioxide as a byproduct of operation, fuel cell powered electrical energy generation processes may also be good candidates for decarbonization.

### Summary

As used below, any reference to a series of examples is to be understood as a reference to each of those examples disjunctively (e.g., "Examples 1-4" or "Examples 1 to 4" is to be understood as "Examples 1, 2, 3, or 4").

Example No. 1 is an electrical energy generation system including a fuel cell having an anode and a cathode separated by and each in contact with an electrolyte. An anodic heat recovery subsystem is usable to preheat a fuel feed supplied to the anode using heat recovered from an anodic exhaust gas produced by electrochemical reactions within the fuel cell, and a cathodic heat recovery subsystem is usable to preheat an oxidant supplied to the cathode using heat recovered from a cathodic exhaust gas produced by electrochemical reactions within the fuel cell. A vapor absorption and refrigeration device arranged to receive a heat transfer fluid heated by the heat recovered from the anodic exhaust gas and the cathodic exhaust gas and to generate a refrigerant stream at least in part by using heat from the heated heat transfer fluid. The electrical energy generation system also includes a carbon capture system for capturing and liquefying carbon dioxide present in the anodic exhaust gas. The carbon capture system includes a gas compression subsystem and a liquefaction subsystem, where at least the liquefaction subsystem arranged to use the refrigerant stream generated by the vapor absorption and refrigeration device to liquefy the carbon dioxide.

Example No. 2 is Example No. 1, wherein the fuel cell comprises a solid oxide fuel cell or a protonic ceramic fuel cell, and the fuel comprises a gas selected from hydrogen, carbon monoxide, methane, propane, butane, fermentation gases, gasified biomass, paint vapors, and a combination thereof, or a liquid selected from methanol, ethanol, diesel, and gasoline; and the oxidant is air.

Example No. 3 is Example No. 1 or Example No. 2, wherein the anodic heat recovery subsystem includes at least one heat recovery exchanger and at least one heat transfer fluid heating exchanger arranged one above the other within a vertical chamber defined by an enclosure of a first heat exchanger unit having an inlet in fluid communication with an anode side outlet of the fuel cell. The at least one heat recovery exchanger and the at least one heat transfer fluid heating exchanger are arranged for passage therethrough of a stream of the anodic exhaust gas. Heat from the anodic exhaust gas is transferable to the fuel feed by the at least one heat recovery exchanger, and heat from the anodic exhaust gas is transferable to the heat transfer fluid by the at least one heat transfer fluid heating exchanger.

Example No. 4 is Example No. 3, further including a downstream heat exchanger interposed along an anodic exhaust gas flow path upstream of the gas compression subsystem of the carbon capture system and wherein the downstream heat exchanger is arranged to receive a water condensate from a water condensate separation vessel associated with the gas compression subsystem, and is usable to produce a water-steam mixture and to cool the anodic exhaust gas by transferring heat from the anodic exhaust gas to the water condensate. The water-steam mixture is directable to the fuel feed at a point upstream of the first heat exchanger unit, and the water is further heatable by the at least one heat transfer fluid heating exchanger of the first heat exchanger unit and is thereafter directable to the vapor absorption and refrigeration device.

Example No. 5 is any one of Example No. 1 to Example No. 4, wherein the cathodic heat recovery subsystem includes at least one heat recovery exchanger and at least one heat transfer fluid heating exchanger arranged one above the other within a vertical chamber defined by an enclosure of a second heat exchanger unit having an inlet in fluid communication with a cathode side outlet of the fuel cell. The at least one heat recovery exchanger and the at least one heat transfer fluid heating exchanger are arranged for passage therethrough of a stream of the cathodic exhaust gas. Heat from the cathodic exhaust gas is transferable to the oxidant by the at least one heat recovery exchanger, and heat from the cathodic exhaust gas is transferable to the heat transfer fluid by the at least one heat transfer fluid heating exchanger.

Example No. 6 is any one of Example No. 1 to Example No. 5, wherein the gas compression subsystem includes a compressor unit having a plurality of exhaust gas compressors, and a compression cooling unit having a plurality of cooling devices. The exhaust gas compressors are arranged to compress the anodic exhaust gas in stages, and the anodic exhaust gas is coolable during compression thereof by the plurality of cooling devices using a refrigerant stream supplied by the vapor absorption and refrigeration device. The liquefaction subsystem is arranged to receive a compressed gas flow from the gas compression subsystem and includes a refrigeration compressor unit having one or more compressors and a carbon dioxide condensing unit having a plurality of condensation cooling devices. The refrigerant received from the vapor absorption and refrigeration device is compressible by the one or more compressors, and compressed gaseous carbon dioxide is condensable into liquefied carbon dioxide by transferring heat from the compressed gaseous carbon dioxide to the refrigerant stream by the plurality of condensation cooling devices.

Example No. 7 is Example No. 6, wherein a separator is interposed between the gas compression subsystem and the liquefaction subsystem, compressed gaseous carbon dioxide is separable by the separator from other gases in a compressed gas flow discharged from the gas compression subsystem, and the compressed gaseous carbon dioxide is thereafter directable to the liquefaction subsystem.

Example No. 8 is a system for decarbonizing an electrical energy generation system powered by a fuel cell. The system includes a first heat exchanger unit having an inlet arranged for fluid communication with an anode side outlet of the fuel cell and having at least one anode side heat transfer fluid heating exchanger to heat a circulation of heat transfer fluid using heat recovered from an anodic exhaust gas produced by electrochemical reactions within the fuel cell, and a second heat exchanger unit having an inlet arranged for fluid communication with a cathode side outlet of the fuel cell and including at least one cathode side heat transfer fluid heating exchanger to heat the circulation of heat transfer fluid using heat recovered from a cathodic exhaust gas produced by the electrochemical reactions within the fuel cell. A carbon capture system is provided for capturing and liquefying carbon dioxide present in the anodic exhaust gas, and includes a gas compression subsystem and a liquefaction subsystem. A vapor absorption and refrigeration device is arranged to receive the circulation of heat transfer fluid heated by the anode side heat transfer fluid heating exchanger and the cathode side heat transfer fluid heating exchanger to generate a refrigerant stream using, at least in part, heat from the heated heat transfer fluid, and to circulate the refrigerant stream to at least the liquefaction subsystem of the carbon capture system.

Example No. 9 is Example No. 8, further including a water-gas shift reactor located downstream of the anode side heat transfer fluid heating exchanger, and positioned in a flow path of the anodic exhaust gas to convert carbon monoxide in the anodic exhaust gas to carbon dioxide.

Example No. 1 0 is Example No. 8 or Example No. 9, further including a downstream heat exchanger interposed along an anodic exhaust gas flow path between the first heat exchanger unit and the gas compression subsystem of the carbon capture system. The downstream heat exchanger is arranged to receive a water condensate from a water condensate separation vessel associated with the gas compression subsystem, and is usable to produce a water-steam mixture and to cool the anodic exhaust gas by transferring heat from the anodic exhaust gas to the water condensate. The water-steam mixture is directable to a fuel feed that is suppliable to an anode side of the fuel cell, and the water is further heatable by the at least one heat transfer fluid heating exchanger of the first heat exchanger unit and is thereafter directable to the vapor absorption and refrigeration device.

Example No. 11 is any one of Example No. 8 to Example. No. 10, wherein the at least one anode side heat transfer fluid heating exchanger and the at least one cathode side heat transfer fluid heating exchanger are plate and frame type heat exchangers that are stacked within respective enclosures.

Example No. 12 is any one of Example No. 8 to Example. No. 11, wherein the liquefaction subsystem is arranged to receive a compressed gas flow from the gas compression subsystem and includes a refrigeration compressor unit having one or more compressors and a carbon dioxide condensing unit having a plurality of condensation cooling devices. The refrigerant stream received from the vapor absorption and refrigeration device is compressible by the one or more compressors; and compressed gaseous carbon dioxide is condensable into liquefied carbon dioxide by transferring heat from the compressed gaseous carbon dioxide to the refrigerant stream by the plurality of condensation cooling devices.

Example No. 13 is Example No. 12, wherein a separator is interposed between the gas compression subsystem and the liquefaction subsystem, compressed gaseous carbon dioxide is separable by the separator from other gases in a compressed gas flow discharged from the gas compression subsystem, and the compressed gaseous carbon dioxide is thereafter directable to the liquefaction subsystem.

Example No. 14 is a method of operating an electrical energy generation system including, at a fuel cell having an anode and a cathode separated by and each in contact with an electrolyte, supplying a fuel feed to the anode and an oxidant to the cathode to cause electrochemical reactions within the fuel cell by which chemical energy in the fuel is converted into electrical energy. The method also includes subsequently preheating the fuel feed using heat recovered from an anodic exhaust gas produced by the electrochemical reactions within the fuel cell, and subsequently preheating the oxidant using heat recovered from a cathodic exhaust gas produced by the electrochemical reactions within the fuel cell. A refrigerant stream is generated by a vapor absorption and refrigeration device using, at least in part, heat transfer fluid heated by the heat recovered from the anodic exhaust gas and the cathodic exhaust gas. Carbon dioxide present in the anodic exhaust gas is captured and liquefied using a carbon capture system having a gas compression subsystem and a liquefaction subsystem. The gas compression subsystem compresses captured carbon dioxide, and the liquefaction subsystem receives at least a portion of the refrigerant stream from the vapor absorption and refrigeration device and uses the refrigerant stream to liquefy the carbon dioxide by lowering a temperature of the compressed carbon dioxide until the compressed carbon dioxide condenses into a liquid.

Example No. 15 is Example No. 14, wherein the fuel feed is preheated by the heat recovered from the anodic exhaust gas to a temperature of 250 °C.

Example No. 16 is Example No. 14 or Example No. 15, wherein the heat transfer fluid is heated by the heat recovered from the anodic exhaust gas and the cathodic exhaust gas to a temperature of between 100 °C to 200 °C.

Example No. 17 is any one of Example No. 14 to Example No. 16, wherein the heat used to preheat the fuel feed is recovered from the anodic exhaust gas by passing the anodic exhaust gas through at least one heat recovery exchanger arranged within a vertical chamber defined by an enclosure of a first heat exchanger unit having an inlet in fluid communication with an anode side outlet of the fuel cell, and the heat used to preheat the oxidant is recovered from the cathodic exhaust gas by passing the cathodic exhaust gas through at least one heat recovery exchanger arranged within a vertical chamber defined by an enclosure of a second heat exchanger unit having an inlet in fluid communication with a cathode side outlet of the fuel cell. The heat used to heat the heat transfer fluid used by the vapor absorption and refrigeration device to cool the refrigerant is recovered by passing the anodic exhaust gas through at least one heat transfer fluid heating exchanger arranged within the vertical chamber of the first heat exchanger unit and by passing the cathodic exhaust gas through at least one heat transfer fluid heating exchanger arranged within the vertical chamber of the second heat exchanger unit.

Example No. 18 is Example No. 17, further including receiving, at a downstream heat exchanger interposed along an anodic exhaust gas flow path upstream of the gas compression subsystem of the carbon capture system, a water condensate from a water condensate separation vessel associated with the gas compression subsystem. A water-steam mixture is produced from the water condensate and the anodic exhaust gas is cooled by transferring heat from the anodic exhaust gas to the water condensate. The cooled anodic exhaust is directed to the gas compression subsystem, and the water-steam mixture is directed to the fuel feed at a point upstream of the first heat exchanger unit. The water is subsequently further heated in the at least one heat transfer fluid heating exchanger of the first heat exchanger unit using the heat recovered from the anodic exhaust gas, and the further heated water is directed to the vapor absorption and refrigeration device.

Example No. 19 is any one of Example No. 14 to Example No. 18, wherein the anodic exhaust gas is compressed in stages by a plurality of exhaust gas compressors of a compressor unit of the gas compression subsystem, and the anodic exhaust gas is cooled during compression in the compressor unit by a plurality of cooling devices of a compression cooling unit of the gas compression subsystem using cooled refrigerant supplied by the vapor absorption and refrigeration device. A stream of compressed gaseous carbon dioxide is discharged by the gas compression subsystem and received by the liquefaction subsystem, and the compressed gaseous carbon dioxide is liquefied by the liquefaction subsystem by lowering the temperature of the compressed gaseous carbon dioxide via heat transfer to the cooled refrigerant received from the vapor absorption and refrigeration device.

Example No. 20 is Example No. 19, wherein a separator is used to separate the compressed gaseous carbon dioxide from at least some amount of other gases discharged with the compressed gaseous carbon dioxide from the gas compression subsystem, the compressed gaseous carbon dioxide is directed to the liquefaction subsystem, and at least some of the other gases are introduced into the fuel feed.

### Brief Description of the Drawings

FIG. 1 is a block diagram of fuel cell powered electrical energy generation system, according to one example configuration.
FIG. 2 is a schematic representation of the fuel cell powered electrical energy generation system of FIG. 1.
FIG. 3 is a flowchart describing one example of a method of capturing and liquefying carbon dioxide produced when generating electrical energy using a fuel cell.

### Detailed Description

Certain aspects and examples of the present disclosure relate to a system and method for decarbonizing a process of generating electrical energy using a fuel cell. More particularly, heat generated by an electrochemical reaction within the fuel cell can be recovered at both an anode side and a cathode side of the fuel cell, and at least some of the recovered heat can be provided to a cooling unit. In the cooling unit, the heat can drive a cooling cycle that is usable, at least in part, in the liquefaction of captured carbon dioxide generated by the electrical energy generation process.

In some examples, the fuel cell may be a solid oxide fuel cell (SOFC) or a protonic ceramic fuel cell (PCFC). A solid oxide fuel cell may include a solid electrolyte layer interposed between and in contact with each of an anode and a cathode. In some examples, the fuel cell may be a stack of multiple anode-cathode-electrolyte cells, which may be connected in series to produce a fuel cell of greater electrical energy output.

A fuel may be supplied to the anode, and an oxidant may be supplied to the cathode. In some examples, the oxidant may be air. In various examples, the fuel may be, for example, a mixture of gases such as hydrogen, carbon monoxide, methane, propane, butane, fermentation gases, gasified biomass, and/or paint vapors, or a liquid fuel such as methanol, ethanol, diesel, or gasoline. The fuel may also include some amount of water vapor. Supplying the fuel to the anode while supplying the oxidant to the cathode causes electrochemical reactions to occur within the fuel cell that convert chemical energy in the fuel into electrical energy.

Both the fuel supplied to the anode and the oxidant supplied to the cathode are preferably supplied at elevated temperatures. In some examples, heat recovered from the anode side and the cathode side of the fuel cell can be used, at least in part, to preheat the fuel supplied to the anode and the oxidant supplied to the cathode. For example, heat output from the anode side of the fuel cell may be circulated along with the fuel through a first heat exchanger structure wherein at least some of the heat can be used to preheat the fuel prior to the fuel being supplied to the anode. Likewise, heat output from the cathode side of the fuel cell may be circulated along with the oxidant through a second heat exchanger structure wherein at least some of the heat can be used to preheat the oxidant prior to the oxidant being supplied to the cathode. This preheating process using recovered heat can at least supplement other heating of the fuel and the oxidant to more efficiently provide each of the fuel and the oxidant to the respective anode and cathode at a desired temperature or within a desired temperature range.

An exhaust gas stream emitted from the anode side of the fuel cell as a result of the electrochemical reactions occurring across the electrolyte may contain a mixture of, for example, carbon monoxide, carbon dioxide, hydrogen, and water. For environmental reasons, it is desirable that the presence of carbon monoxide within the exhaust gas stream is minimized and that as much carbon dioxide as possible is captured and either sequestered or used for other purposes. Thus, in some examples, a fuel cell powered electrical energy generation system may include additional components such as, but not limited to, a water-gas shift reactor, a carbon capture system, and the aforementioned cooling unit.

In some examples, the water-gas shift reactor may be used to convert carbon monoxide in the exhaust gas stream to carbon dioxide, which can thereafter be captured by the downstream carbon capture system. Use of the water-gas shift reactor can also generate water, which can be supplied to the fuel to contribute to additional power generation. In some examples, the water-gas shift reactor may be located within an enclosure of the first heat exchanger structure and arranged such that the exhaust gas stream passes through the water-gas shift reactor.

As described in more detail below, a heated heat transfer fluid (e.g., water) may be used to provide cooling to the downstream carbon capture system. In some examples, heat from a stream of anodic exhaust gas may be transferred via a downstream heat exchanger to a flow of water condensate. The heated water condensate may be directed back to the first heat exchanger structure for additional heating prior to, for example, being directed to the cooling unit. The water condensate heated by the downstream heat exchanger may also be treated prior to being directed back to the first heat exchanger structure.

Carbon dioxide in the anodic exhaust gas may be captured by the carbon capture system. The carbon capture system may include several components, which can cooperate to capture, liquefy, and store carbon dioxide in the anodic exhaust gas. For example, after being cooled in the downstream heat exchanger, the anodic exhaust gas may be directed to a gas compression subsystem of the carbon capture system to increase the pressure of the anodic exhaust gas. In some examples, the gas compression subsystem may include a compressor unit having multiple compressors arranged to provide multiple anodic exhaust gas compression stages. The gas compression subsystem may also include a compressor cooling unit configured to cool the compressed anodic exhaust gas during the compression operation. In some examples, the compressor cooling unit may include multiple compression cooling devices that are arranged to cool the anodic exhaust gas during the anodic exhaust gas compression operation.

After being compressed by the gas compression subsystem, the anodic exhaust gas may still contain a mixture of gases. For example, in addition to carbon dioxide, the anodic exhaust gas may still include at least some amount of hydrogen and/or other gases resulting from the electrochemical reactions in the fuel cell. The carbon dioxide may be separated from any hydrogen and other constituents in the anodic exhaust gas by directing the compressed anodic exhaust gas through a separator of the carbon capture system.

The extracted (captured) carbon dioxide from the exhaust gas may thereafter be directed to a liquefaction subsystem of the carbon capture system. Within the liquefaction subsystem, the carbon dioxide can be condensed and subcooled to form liquefied carbon dioxide.

The subcooling of the carbon dioxide during the liquefaction process may be effectuated using the refrigerant provided by the aforementioned cooling unit. In some examples, the cooling unit may be a vapor absorption refrigeration (VAR) device. As described in more detail below, the VAR device can utilize recovered heat from the fuel cell to produce a low temperature fluid stream that can serve as a refrigerant and can subsequently be circulated to the liquefaction subsystem. In some examples, the heat provided to the VAR device may be recovered from the anode side of the fuel cell, or both the anode side and the cathode side of the fuel cell. Once the captured carbon dioxide has been liquefied by the liquefaction subsystem, the liquefied carbon dioxide may be stored in one or more storage tanks or transferred to another location for storage, sequestration, or use.

Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

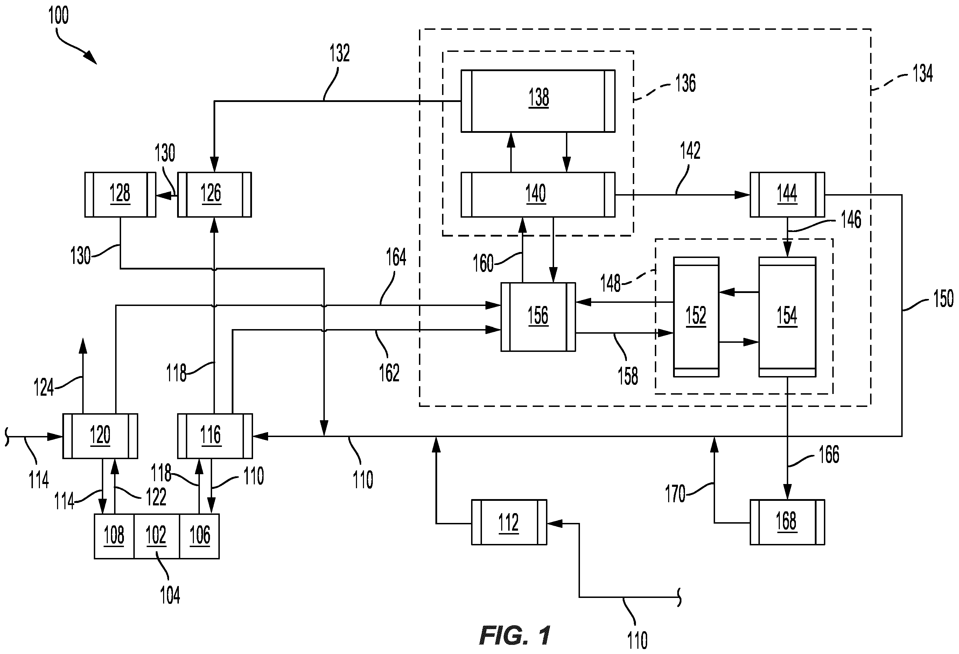

FIG. 1 is a block diagram of an electrical energy generation system 100, according to one example configuration. As shown in FIG. 1, the electrical energy generation system 100 includes a fuel cell 102. In this example, the fuel cell 102 is a solid oxide fuel cell (SOFC) having solid electrolyte layer 104 interposed between and in contact with each of an anode 106 and a cathode 108. The fuel cell 102 may be a stack of multiple anode-cathode-electrolyte cells, which may be connected in series to provide the fuel cell 102 with a greater electrical energy output.

A fuel feed 110 from a fuel source (not shown) may be supplied to the anode side of the fuel cell 102. In some examples, a fuel storage tank 112 may be interposed between the fuel source and the anode 106 such that some amount of fuel may be stored in the fuel storage tank 112 for subsequent supply to the anode side of the fuel cell 102. Likewise, an oxidant, such as air, may be supplied to the cathode side of the fuel cell 102. Supplying the fuel feed 110 to the anode side of the fuel cell 102 while supplying the oxidant 114 to the cathode side of the fuel cell 102 causes electrochemical reactions to occur within the fuel cell 102 that convert chemical energy in the fuel into electrical energy.

As can be observed in FIG. 1, the fuel feed 110 may pass through a first heat exchanger unit 116 prior to being introduced into the anode side of the fuel cell 102. The first heat exchanger unit 116 can be configured to preheat the fuel feed 110 using, at least in part, heat recovered from an anodic exhaust gas 118 resulting from the electrochemical reactions within the fuel cell 102. The anodic exhaust gas 118 may be emitted through an anode side outlet of the fuel cell 102 and directed into an inlet of the first heat exchanger unit 116. In some examples, a water-gas shift reactor may be located within the first heat exchanger unit 116 and used to convert carbon monoxide in the anodic exhaust gas to carbon dioxide.

In a similar manner to the fuel feed 110, the oxidant 114 may pass through a second heat exchanger unit 120 prior to being introduced into the cathode side of the fuel cell 102. The second heat exchanger unit 120 can be configured to preheat the oxidant using, at least in part, heat recovered from a cathodic exhaust gas 122 resulting from the electrochemical reactions within the fuel cell 102. The cathodic exhaust gas 122 may be emitted through a cathode side outlet of the fuel cell 102 and directed into an inlet of the second heat exchanger unit 120. A portion 124 of the cathodic exhaust gas can also be discharged into the atmosphere or may be subjected to a nitrogen recovery process.

The stream of anodic exhaust gas 118, having lost some of its heat by preheating the fuel feed 110, may flow upward and eventually exit the first heat exchanger unit 116 to be further processed by additional downstream system components. As an initial step, a downstream heat exchanger 126 may be utilized to further cool the anodic exhaust gas 118 by transferring the heat of the anodic exhaust gas 118 to water condensate 132 that may be supplied to the downstream heat exchanger 126 from a location further downstream. The water condensate 132 may be routed to the fuel feed 110 and may be heated in the first heat exchanger unit 116 along with the fuel feed 110 before subsequently being provided to a downstream cooling unit 156, as described in more detail below. In some examples, a water treatment unit 128 may be interposed between the downstream heat exchanger 126 and the first heat exchanger unit 116 to remove impurities and the like from the water condensate 132 before it is introduced into the fuel feed 110.

After the anodic exhaust gas 118 has been initially cooled by the downstream heat exchanger 126, carbon dioxide in the anodic exhaust gas 118 may be captured by a carbon capture system 134 of the electrical energy generation system 100. In this regard, the anodic exhaust gas 118 may be initially directed to a gas compression subsystem 136 of the carbon capture system 134 to increase the pressure of the anodic exhaust gas 118. In some examples, the gas compression subsystem may include a compressor unit 138 configured to increase the pressure of the anodic exhaust gas 118, and a compression cooling unit 140 configured to further cool the anodic exhaust gas 118 during the compression operation. A compressed gas stream 142 can be discharged from the gas compression subsystem 136 and directed to further downstream carbon capture components and operations.

The compressed gas stream 142 discharged from the gas compression subsystem 136 may contain other gases (e.g., hydrogen) in addition to carbon dioxide. The carbon dioxide may be separated from other gases in the compressed gas stream 142 prior to being subjected to further carbon capture operations. For example, the carbon dioxide may be separated from the other gases by passing the compressed gas stream 142 through an optional separator 144. In this example, the separator 144 is a membrane separator, but other separator types may be utilized in other examples. Compressed gaseous carbon dioxide 146 separated from the compressed gas stream 142 may thereafter be directed to a liquefaction subsystem 148 of the carbon capture system 134. In some examples, a gas(es) 150 such as hydrogen that has been separated from the carbon dioxide by the separator 144 may be added to the fuel feed 110 at a location upstream of the first heat exchanger unit 116.

The gaseous carbon dioxide 146 can be liquefied by the liquefaction subsystem 148. To that end, the liquefaction subsystem 148 may include, for example, a refrigeration compressor unit 152 having one or more compressors for further compressing the carbon dioxide, and a carbon dioxide condensing unit 154 via which the temperature of the carbon dioxide can be reduced to or below a critical temperature necessary for liquefaction.

A refrigerant in the form of a low temperature fluid stream 158 may be provided to the liquefaction subsystem 148 by the cooling unit 156 for use in lowering the temperature of the compressed gaseous carbon dioxide 146 to or below the critical temperature necessary for liquefaction thereof. In the example of FIG. 1, the cooling unit 156 is a vapor absorption refrigeration (VAR) device, but the use of other cooling devices such as, for example, thermocompression cooling devices, may be possible in other examples. As described in more detail below, the VAR device 156 can utilize recovered heat from the fuel cell 102 to generate a first low temperature fluid stream 158 that can be provided to the liquefaction subsystem 148. In some examples, a second low temperature fluid stream 160 can also be produced by the VAR device 156 and supplied to the compression cooling unit 140 of the gas compression subsystem 136.

In some examples, the VAR device 156 may provide all the cooling required by the liquefaction subsystem 148 of the carbon capture system 134. In other examples, such as when the fuel 110 supplied to the anode side of the fuel cell 102 is liquefied natural gas, the inherently low temperature of the liquefied natural gas can be used to supplement the cooling provided by the VAR device 156 to the liquefaction subsystem 148. For example, at least some of the liquefied natural gas can be circulated through the liquefaction subsystem 148 prior to supplying the liquefied natural gas to the fuel cell 102.

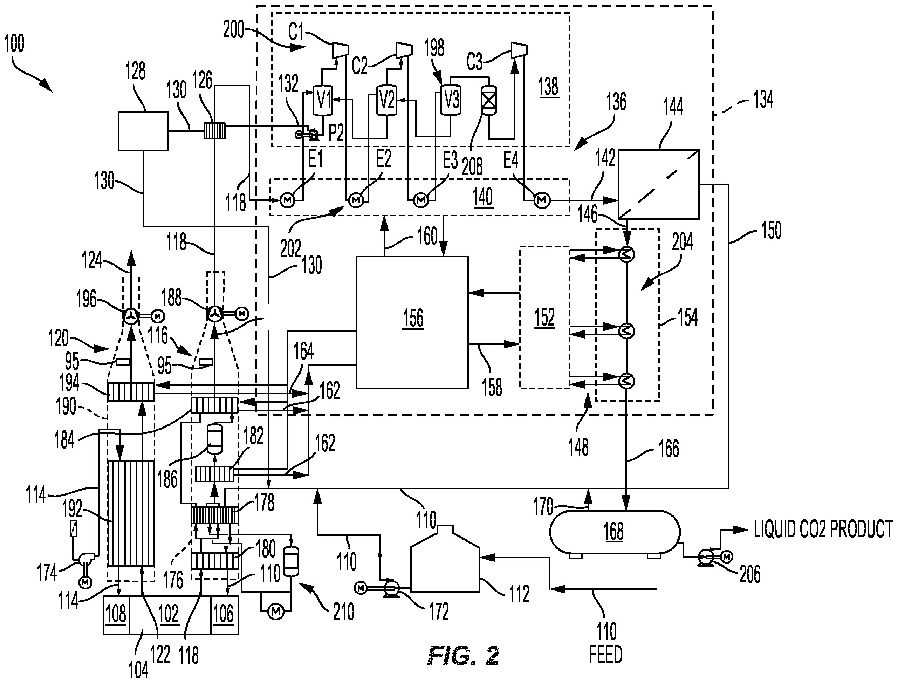

In some examples, liquefied carbon dioxide 166 can be discharged from the liquefaction subsystem 148 of the carbon capture system 134 and directed to one or more storage tanks 168. In other examples, liquefied carbon dioxide 166 can be discharged from the liquefaction subsystem 148 and transferred to another location for storage, sequestration, or use. When liquefied carbon dioxide 166 is stored in the one or more storage tanks 168, non-condensed gas(es) (e.g., hydrogen) present in the liquefied carbon dioxide 166 may, in some examples, be added to the recycled fuel feed 150 supplied by the membrane 144 to the anode side of the fuel cell 102. When present, boil-off-gas in the liquefied carbon dioxide stored in the one or more storage tanks 168 may also be emitted from the one or more storage tanks 168 with a gas stream 170 (see FIG. 2) and may be added to the recycled fuel feed 150 supplied to the anode side 106 of the fuel cell 102. In another example, a non-condensed gas(es) and/or boil-off-gas stream 170 emitted from the outlet(s) of the one or more storage tanks 168 may be added to the liquefied natural gas fuel feed 110 discharged from the fuel storage tank 112.

FIG. 2 is a block diagram providing a more detailed view of the electrical energy generation system 100 of FIG. 1. The SOFC or PCFC fuel cell 102 may be observed at the bottom-left of FIG. 2 and can be seen to include the solid electrolyte layer 104 interposed between and in contact with each of the anode 106 and the cathode 108. While only a single anode 106 and a single cathode 108 are shown for clarity in FIG. 2, the fuel cell 102 is likely to be, in practice, a stack of multiple anode-cathode-electrolyte cells, which may be connected in series to provide the fuel cell 102 with a greater electrical energy output. Thus, in some examples the fuel cell 102 may include a single anode and a single cathode, while in other examples the fuel cell may include a plurality of anodes and a plurality of cathodes. The fuel cell 102 may operate at high temperatures. For example, the fuel cell 102 may operate at a temperature of about 800 °C.

In this example, the fuel feed 110 from the fuel source passes through the fuel storage tank 112 prior to entering the first heat exchanger unit 116. A pump 172 may be in fluid communication with the fuel feed 110 to ensure that the pressure of the fuel feed 110 is sufficient when passing through the first heat exchanger unit 116 and at the inlet to the anode side of the fuel cell 102. The oxidant 114 (e.g., air) is shown to be supplied to the cathode side of the fuel cell 102 after passing through the second heat exchanger unit 120. An oxidant blower 174 may be provided to ensure that the pressure of the oxidant 114 is sufficient when passing through the second heat exchanger unit 120 and at the inlet of the cathode side of the fuel cell 102.

As can be observed, the first heat exchanger unit 116 may include an enclosure 176 configured to form a vertical chamber. One or more heat exchangers may be located and arranged within the chamber of the enclosure 176. In this example, the one or more heat exchangers is a series of heat exchangers 178, 180, 182, 184 that are arranged one of above another from a lower portion of the chamber to an upper portion of the chamber to facilitate passage therethrough of a natural upward flow of the anodic exhaust gas 118 within the chamber. This arrangement of the heat exchangers 178, 180, 182, 184 can avoid the need to provide separate pipelines or joints between the heat exchangers and also helps to avoid any pressure drop within the system.

In this example of the first heat exchanger unit 116, the heat exchangers 178, 180, 182, 184 may include, for example, an anode side first heat recovery exchanger 178 and an anode side second heat recovery exchanger 180. The anode side first heat recovery exchanger 178 and the anode side second heat recovery exchanger 180 may cooperate to preheat the fuel feed 110 before the fuel feed is introduced to the anode side of the fuel cell 102. To this end, the anode side first heat recovery exchanger 178 resides above the second heat recovery exchanger 180 in this example, such that the anode side first heat recovery exchanger 178 initially receives and preheats the fuel feed 110 before directing the initially preheated fuel feed 110 to the second heat recovery exchanger 180 for further preheating prior to introduction of the fuel feed 110 into the fuel cell 102.

The heat exchangers 178, 180, 182, 184 of the first heat exchanger unit 116 may also include, for example, an anode side first heat transfer fluid heating exchanger 182 and an anode side second heat transfer fluid heating exchanger 184. In this example, the heat transfer fluid is water, but the heat transfer fluid may be another fluid in other examples. Each of the anode side first heat transfer fluid heating exchanger 182 and the anode side second heat transfer fluid heating exchanger 184 may be arranged and configured to heat transfer fluid that is circulated between the first heat exchanger unit 116 and the VAR device 156. The heat transfer fluid 162 may be initially heated in the anode side first heat transfer fluid heating exchanger 182 and then further heated in the anode side second heat transfer fluid heating exchanger 184 residing downstream of the anode side first heat transfer fluid heating exchanger 182 before being provided to the VAR device 156.

Preheating of the fuel feed 110 and heating of the heat transfer fluid 162 provided to the VAR device 156 may be accomplished, at least in part, using heat recovered from the anodic exhaust gas 118 that is discharged from the anode side of the fuel cell 102 and passes upward through the first heat exchanger unit 116 and the individual heat exchangers 178, 180, 182, 184 located therein. The anodic exhaust gas 118 is typically a high temperature gas stream. For example, the temperature of the anodic exhaust gas 118 may be approximately 800 °C, which renders the anodic exhaust gas 118 highly effective for preheating the fuel feed 110 and the heat transfer fluid 162 provided to the VAR device 156.

In some examples, heat recovered from the anodic exhaust gas 118 may be usable to increase the temperature of the fuel feed 110 to 250 °C or more. The maximum temperature to which the fuel feed 110 can be raised by the heat recovered from the anodic exhaust gas 118 is dependent at least in part on the anodic side outlet temperature of the fuel cell 102. When required, supplemental heating may be provided to further raise the temperature of the fuel feed 110 to approximately 600 °C prior to introducing the fuel feed 110 into the anode side of the fuel cell. The fuel feed 110 may also, in at least some examples where the fuel of the fuel feed is other than methane, be directed to a pre-reformer 210 to produce a methane/syngas mixture before being introduced into the anode side of the fuel cell 102.

The second heat exchanger unit 120 may also include an enclosure 190 configured to form a vertical chamber. One or more heat exchangers may be located and arranged within the chamber of the enclosure 190. In this example, the one or more heat exchangers is a pair of heat exchangers 192, 194 arranged one of above another to facilitate passage therethrough of a natural upward flow of the cathodic exhaust gas 122 within the chamber. As with the first heat exchanger unit 116, this can avoid the need to provide separate pipelines or joints between the heat exchangers 192, 194 and also helps to minimize pressure drop within the system.

In this example of the second heat exchanger unit 120, the heat exchangers may include, for example, a cathode side heat recovery exchanger 192 and a cathode side heat transfer fluid heating exchanger 194. The cathode side heat recovery exchanger 192 may preheat the oxidant 114 using heat recovered from the cathodic exhaust gas 122 prior to the oxidant 114 being introduced to the cathode side of the fuel cell 102. The cathodic exhaust gas 122 is typically a high temperature gas stream like the anodic exhaust gas 118. For example, the temperature of the cathodic exhaust gas 122 may also be approximately 800 °C, which renders the cathodic exhaust gas 122 highly effective for preheating the oxidant 114 and the heat transfer fluid provided to the VAR device 156. In some examples, heat recovered from the cathodic exhaust gas 122 may be usable to increase the temperature of the oxidant 114 to 250 °C or more. When required, supplemental heating may be provided to further raise the temperature of the oxidant 114 to approximately 600 °C prior to introducing the oxidant 114 into the cathode side of the fuel cell 102.

The cathode side heat transfer fluid heating exchanger 194 may be arranged and configured to assist with heating the heat transfer fluid that is circulated between the second heat exchanger unit 120 and the VAR device 156. The heat transfer fluid 164 provided to the VAR device 156 from the second heat exchanger unit 120 may be heated in the heat transfer fluid heating exchanger 194 using heat recovered from cathodic exhaust gas 122 as the cathodic exhaust gas 122 passes through the second heat exchanger unit 120.

The cathodic exhaust gas 122 may be an oxygen-depleted gas, such as oxygen-depleted air. As previously mentioned, at least a portion of the cathodic exhaust gas 122 may also be discharged into the atmosphere or may be directed to a nitrogen recovery system. In the latter case, recovered nitrogen may serve as a source of inert gas for different applications. A cathodic exhaust gas blower 196 may be associated with the second heat exchanger unit 120 to encourage movement of the cathodic exhaust gas 122 through the heat exchangers 192, 194 and to facilitate discharge of cathodic exhaust gas 122 to the atmosphere or to the nitrogen recovery system.

As illustrated herein, the heat exchangers 178, 180, 182, 184 of the first heat exchanger unit 116 and the heat exchangers 192, 194 of the second heat exchanger unit 120 are plate and frame heat exchangers, which are stacked one above another within the respective enclosures 176, 190. Such a heat exchanger design can provide, among other advantages, a reduced heat exchanger unit 116, 120 footprint. Heat recovery can also be maximized, as plate and frame type heat exchangers can be capable of achieving a temperature differential of less than 3 °C. Plate and frame type heat exchangers are also modular in nature, which can facilitate maintenance. In other examples, particularly if future fuel cell development results in usable high pressure SOFCs or PCFCs, the plate and frame type heat exchangers shown in the drawings figures may be replaced with a series of shell and tube heat exchangers.

In some examples, the heat transfer fluid provided to the VAR device 156 may be heated to a minimum temperature of between 100 °C to 130 °C using heat recovered from the anodic exhaust gas 118 and the cathodic exhaust gas 122. In other examples, the heat transfer fluid may be converted to low-pressure steam by using heat recovered from the anodic exhaust gas 118 and the cathodic exhaust gas 122 to raise the temperature of the heat transfer fluid refrigerant to a minimum of between 150 °C to 200 °C.

Utilizing heat recovered from the anodic exhaust gas 118 to preheat the fuel feed 110 and to heat the heat transfer fluid provided to the VAR device 156 reduces the temperature of the anodic exhaust gas 118. For example, the temperature of the anodic exhaust gas 118 may be reduced to approximately 95 °C at a point downstream of the anode side second heat transfer fluid heating exchanger 184. The reduced temperature of the anode exhaust gas 118 can help to minimize the size of other downstream components of the electrical energy generation system 100.

The anodic exhaust gas 118 is also shown to pass through a water-gas shift reactor 186, which can be used to convert carbon monoxide in the anodic exhaust gas 118 to carbon dioxide and hydrogen. The carbon dioxide may be subsequently captured and liquefied by the downstream carbon capture system 134. In this example, the water-gas shift reactor 186 is located within the enclosure 176 of the first heat exchanger unit 116. In other examples, the water-gas shift reactor 186 may be external of the first heat exchanger unit 116 and the anodic exhaust gas 118 may be routed between the first heat exchanger unit 116 and the water-gas shift reactor 186. In either case, an operating temperature of the water-gas shift reactor 186 may be adjusted using heat recovered from the anodic exhaust gas 118. In some examples, the operating temperature of the water-gas shift reactor 186 may be maintained at or above a minimum operating temperature of about 180 °C using the recovered heat. The reaction that causes a conversion of carbon monoxide to carbon dioxide within the water-gas shift reactor 186 is an exothermic reaction. Thus, the temperature of the anodic exhaust gas 118 stream at the exit of the water-gas shift reactor 186 will be greater than the temperature of the anodic exhaust gas 118 stream at the inlet of the water-gas shift reactor 186. For example, the temperature of the anodic exhaust gas 118 stream at the exit of the water-gas shift reactor 186 may be a minimum of 250 °C in some examples. At least some of the heat reintroduced into the anodic exhaust gas 118 stream by the water-gas shift reaction may be used to heat the heat transfer fluid in the anode side second heat transfer fluid heating exchanger 184.

After passing through the heat exchangers 178, 180, 182, 184 and the water-gas shift reactor 186, the anodic exhaust gas 118 may be directed to an anodic exhaust gas blower 188. The anodic exhaust gas blower 188 can ensure that the anodic exhaust gas 118 is properly discharged from the first heat exchanger unit 116 and can facilitate the flow of the anodic exhaust gas 118 to other downstream components of the electrical energy generation system 100.

The stream of the anodic exhaust gas 118 that exits the first heat exchanger unit 116 may contain, for example, hydrogen, water vapor, carbon monoxide, carbon dioxide, some unreacted hydrocarbon gas such as methane, and other reaction by-products and impurities. As such, the anodic exhaust gas 118 may be further processed by additional downstream system components. For example, after passing through the anodic exhaust gas blower 188, the anodic exhaust gas 118 may be initially cooled at the downstream heat exchanger 126 by transferring heat from the anodic exhaust gas 118 to a water condensate 132, which may be pumped to the downstream heat exchanger 126 from, for example, one or more downstream water condensate drums 198 (or compressor first knockout drums) associated with the compressor unit 138. The transfer of heat from the anodic exhaust gas 118 can heat the water condensate 132 to produce a water-steam mixture 130 that may thereafter be added to the fuel feed 110 supplied to the anode side of the fuel cell 102. The water-steam mixture 130 can be passed through the water treatment unit 128 to avoid fouling or corrosion issues prior to being directed to the fuel feed 110. Preferably, the water-steam mixture 130 is introduced into the fuel feed 110 prior to entry of the fuel feed 110 into the first heat exchanger unit 116.

At the point of discharge of the anodic exhaust gas 118 from the downstream heat exchanger 126, the anodic exhaust gas 118 is a carbon dioxide rich gas stream and may still contain water vapor. The anodic exhaust gas 118 may thereafter be further dried, such as by passing the anodic exhaust gas 118 through a dryer 208. In some examples, the dryer 208 may be a molecular sieve type dryer. The dryer 208 may be usable to lower the moisture level of the anodic exhaust gas 118 to less than 1 ppm. At least when the dryer 208 is a molecular sieve dryer, the dryer 208 may be placed at higher pressure stage (e.g., 6 bar or higher) to optimize performance of the dryer.

Subsequent to cooling of the anodic exhaust gas 118 by the downstream heat exchanger 126 and possible additional drying, the process of capturing carbon dioxide in the anodic exhaust gas 118 may be initiated by directing the anodic exhaust gas 118 to the gas compression subsystem 136 of the carbon capture system 134. As shown, the gas compression subsystem 136 includes a compressor unit 138 configured to increase the pressure of the anodic exhaust gas 118, and a compression cooling unit 140 configured to further cool the anodic exhaust gas 118 during the compression operation. This example of the compressor unit 138 includes a plurality of exhaust gas compressors 200, which are labeled herein as C1, C2, and C3 only for purpose of differentiation.

In this example of the compressor unit 138, the exhaust gas compressors 200 are arranged and configured to incrementally increase the pressure of the anodic exhaust gas 118 in multiple stages. Increasing the pressure of the exhaust gas incrementally via the multiple compression stages can allow the pressure of the anodic exhaust gas 118 to be increased to a desired level with a lesser resulting increase in the temperature of the anodic exhaust gas 118 than is possible if the pressure increase is accomplished in a single compression stage. Lower inlet temperatures afforded by multistage compression of the anodic exhaust gas 118 may also permit the use of a higher interstage compression ratio. Nonetheless, single stage compression as well as compression via a different number of multiple compression stages is possible in other examples. In some examples, the anodic exhaust gas 118 may be compressed in the compressor unit 138 to a minimum pressure of 60 bar or to another pressure required for downstream carbon dioxide separation.

The compression cooling unit 140 can include a plurality of cooling devices 202 that can be arranged and configured to cool the anodic exhaust gas 118 during compression thereof by the exhaust compressors 200 of the compressor unit 138. In the example, the compression cooling unit 140 includes four cooling devices 202 that are labeled as E1, E2, E3, and E4 only for purpose of differentiation. The arrangement of the cooling devices 202 in this example can operate to cool the anodic exhaust gas 118 prior to initial compression of the anodic exhaust gas 118 by the first compressor C1, between the second and third compression stages performed respectively by the second compressor C2 and the third compressor C3, and also after the third compression stage. Other numbers of cooling devices and related cooling strategies may be employed in other examples.

As may be observed in FIG. 2, the stream of the anodic exhaust gas 118 discharged from the downstream heat exchanger 126 may be directed to the first cooling device E1 of the compression cooling unit 140 prior to being directed to a first compressor C1 of the multiple exhaust compressors 200 of the compressor unit 138. This can allow the stream of anodic exhaust gas 118 to be further cooled by the first cooling device E1 before arriving at the first compressor C1 of the compressor unit 138, which can help to prevent compressor damage by minimizing or eliminating the presence of water within the anodic exhaust gas 118. Further cooling of the anodic exhaust gas 118 by the compression cooling unit 140 of the gas compression subsystem 136 can also minimize the required cooling load on other downstream system components. As described in more detail below, a flow of cooled refrigerant from the VAR device 156 (or another refrigeration device) may be supplied to the cooling devices 202 of the compression cooling unit 140 for cooling of the anodic exhaust gas 118 during compression thereof by the compressor unit 138.

After multi-stage compression of the anodic exhaust gas 118 in the gas compression subsystem 136, a compressed gas stream 142 is discharged from the gas compression subsystem 136 for additional downstream processing. In this example, the compressed gas stream 142 is discharged from the compression cooling unit 140 and, more particularly, from the last cooling device E4 of the plurality of cooling devices 202, where the compressed gas stream 142 is subjected to a final cooling step prior to discharge from the gas compression subsystem 136.

In some examples, the compressed gas stream 142 may exit the gas compression subsystem 136 at a pressure of approximately 30 bar rather than a lower pressure of, for example, 7 bar. At a pressure of 30 bar, the boiling point of carbon dioxide is -16 °C, whereas at a pressure of 7 bar, the boiling point of carbon dioxide is -49 °C. Compressing the carbon dioxide to a higher pressure such as 30 bar can help to ensure there is enough cold energy available in the refrigerant provided by the VAR device 156 to fully liquefy the captured carbon dioxide without the need for an additional cooling system.

The compressed gas stream 142 may contain carbon dioxide, as well as other gases such as, but not limited to, hydrogen and small amounts of carbon monoxide. The carbon dioxide may be separated from other gases in the compressed gas stream 142 prior to being subjected to further carbon capture operations. For example, the carbon dioxide may be separated from the other gases by passing the compressed gas stream 142 through the optional separator 144. In this example, the separator 144 is a membrane separator. In other examples, the separator may utilize a fluid (e.g., an amine-based fluid) adsorption process, a cryogenic process, or another mechanism to extract carbon dioxide from the exhaust gas. In some examples, the gas(es) 150 that have been separated from the carbon dioxide by the separator 144 may be introduced into the fuel feed 110 at a location upstream of the first heat exchanger unit 116.

While not specifically illustrated in the drawing figures, in examples where the optional separator 144 is omitted from the system 100, one or more other non-condensed gases (e.g., hydrogen) in the compressed gas stream 142 may be sent to the liquefaction subsystem 148 of the carbon capture system 134 along with the carbon dioxide. The one or more non-condensed gases will remain in a gaseous state and may be added to the fuel feed 110 supplied to the anode side of the fuel cell 102 as part of a gas (e.g., hydrogen, boil-off-gas) stream 170 discharged from an outlet(s) of the one or more storage tanks 168.

In other examples, a separation drum may be used in lieu of or in addition to the separator 144. When present, the separation drum may be located upstream of the one or more storage tanks 168, and may be used to remove hydrogen and other non-condensed gases (e.g., CO) from the compressed gas stream 142 discharged by the gas compression subsystem 136. In one example where such a separation drum is provided, liquefied carbon dioxide 166 can be directed to the one or more storage tanks 168, while the non-condensed gases in the compressed gas stream 142 can be added to the fuel feed 110 discharged from the fuel storage tank 112. In another example where such a separation drum is provided and the membrane 144 is also present, liquefied carbon dioxide 166 can be directed to the one or more storage tanks 168, while the non-condensed gases in the compressed gas stream 142 can be mixed with the recycled fuel feed 150 exiting the membrane 144.

In this example, a stream of compressed gaseous carbon dioxide 146 separated from the compressed gas stream 142 may thereafter be directed to the liquefaction subsystem 148 of the carbon capture system 134, where it may be subjected to stepwise cooling, condensing and sub-cooling to produce liquefied carbon dioxide that can be stored with minimal boil-off-gas generation. The liquefaction subsystem 148 may have various configurations. For example, in some configurations the liquefaction subsystem 148 may utilize refrigerant circulation through a heat exchanger to cool and condense the compressed gaseous carbon dioxide 146.

In the example of FIG. 2, the liquefaction subsystem 148 includes the refrigeration compressor unit 152 having one or more compressors for compressing a refrigerant, and the carbon dioxide condensing unit 154 via which the temperature of the compressed gaseous carbon dioxide 146 can be lowered to or below a critical temperature at which the compressed gaseous carbon dioxide 146 will condense into a liquid. As shown, the carbon dioxide condensing unit 154 may include a plurality of condensation cooling devices 204 that can cause a cooling and liquefaction of the compressed gaseous carbon dioxide 146 by transferring heat in the compressed gaseous carbon dioxide 146 to the refrigerant, which is circulated between the condensation cooling devices 204 and the refrigeration compressor unit 152.

In the example of FIG. 2, cooled refrigerant can be supplied to the refrigeration compressor unit 152 of the liquefaction subsystem 148, at least in part, by the above-described vapor absorption refrigeration (VAR) device 156. The VAR device 156 is heat-driven and can utilize the absorption and desorption of a refrigerant to generate the aforementioned low temperature fluid (refrigerant) streams 158, 160, which may be between, for example, 0 °C and 15 °C. The VAR device 156 may include components such as, for example, a generator, a condenser, an evaporator, and an absorber. The VAR device 156 may perform multiple unitary operations, may utilize external cooling (e.g., aero cooling), and may use electrical power to drive its various components.

The VAR device may operate using fluids such as, for example, a mixture of ammonia and water (NH₃-H₂O) or a mixture of lithium bromide and water (LiBr-H₂O), where the water serves as a refrigerant and the ammonia or the lithium bromide acts as an absorbent. As shown, at least some amount of cooled refrigerant 160 produced by the VAR device 156 may also be supplied to the compression cooling unit 140 of the gas compression subsystem 136 to help cool the anodic exhaust gas 118 during compression thereof.

Supplying the refrigerant stream 158 from the VAR device 156 to the refrigeration compressor unit 152 of the liquefaction subsystem 148 can reduce the amount of electrical energy required to operate the compressors of the refrigeration compressor unit 152, which can improve the efficiency and compacity of the refrigeration compressor unit 152. In some cases, it may also be possible to reduce a compression stage, thereby resulting in an overall more efficient and more compact carbon dioxide compression system. Supplying the refrigerant stream 160 from the VAR device to the gas compression subsystem 136 (e.g., to a water condensate drum thereof) can maximize condensed water recovery prior the dryer 208. of the liquefaction subsystem 148 can reduce the amount of electrical energy required to operate the compressors of the refrigeration compressor unit 152, which can improve the efficiency and compacity of the refrigeration compressor unit 152. In some cases, it may also be possible to reduce a compression stage, thereby resulting in an overall more efficient and more compact carbon dioxide compression system. When directed to the carbon dioxide compressor after the coolers, the low temperature of the refrigerant provided by the VAR device 156 can reduce the amount of energy required for compression and may allow for removal of a compression stage in some cases. When utilized directly in the carbon dioxide condensation section of the liquefaction subsystem 148, the refrigerant stream 158 can provide at least a portion of the cold energy required for carbon dioxide condensation and liquefaction. In some examples, the refrigerant stream 158 can be used to pre-cool the carbon dioxide prior to liquefaction. In other examples, the refrigerant stream 158 can be used for carbon dioxide liquefaction or subcooling with appropriate compression of the carbon dioxide (e.g., compression to a pressure of 45 bar).

The VAR device 156 can utilize recovered heat from the fuel cell 102 to generate the low temperature fluid (refrigerant) streams 158, 160 prior to circulation of the refrigerant 158, 160 to the liquefaction subsystem 148 and the gas compression subsystem 136. As indicated in FIG. 2 and as previously described, the heated heat transfer fluid 162 produced by the first heat transfer fluid heating exchanger 182 and the second heat transfer fluid heating exchanger 184 of the first heat exchanger unit 116, and heated heat transfer fluid 164 produced by the heat transfer fluid heating exchanger 194 of the second heat exchanger unit 120, may be supplied to the VAR device 156 for generating the low temperature fluid stream 158. After being used to cool the refrigerant, the heat imparted to the refrigerant of the VAR device 156 by the refrigeration cycle may be rejected to atmosphere.

In examples where a liquefied natural gas fuel feed is used to supplement the cooling provided by the VAR device 156 to at least the liquefaction subsystem 148, at least some of the liquefied natural gas fuel feed may be circulated through the liquefaction subsystem 148 prior to supplying the liquefied natural gas fuel feed to the fuel cell 102. For example, the liquefaction subsystem 148 may include a carbon dioxide/liquefied natural gas heat exchanger, wherein heat from the compressed gaseous carbon dioxide 146 can be transferred to a diverted portion of the liquefied natural gas fuel feed, which circulates within the heat exchanger at a much lower temperature than the carbon dioxide.

After liquefaction of the compressed gaseous carbon dioxide 146 by the liquefaction subsystem 148, liquefied carbon dioxide 166 is discharged therefrom to the one or more storage tanks 168. In some examples, the one or more storage tanks 168 may be local to the carbon capture system 134. In other examples, the one or more storage tanks 168 may be remote from the carbon capture system 134 and the liquefied carbon dioxide 166 may be transported to the one or more storage tanks 168 by a pipeline or another conduit. One or more pumps 206 may be provided to transfer liquefied natural gas from the one or more storage tanks 168 to another location. Non-condensed hydrogen present in the liquid carbon dioxide is shown to be introduced into the fuel feed 110 supplied to the anode side of the fuel cell 102. The non-condensed gas (e.g., hydrogen and/or boil-off gas) stream 170 may pass through a pressure reducing device prior to introduction to the fuel feed 110.

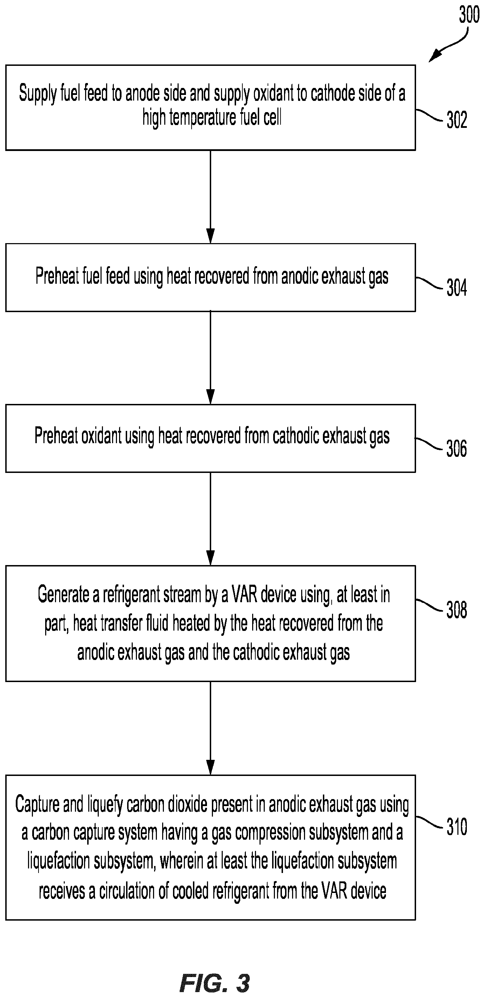

FIG. 3 is a flowchart 300 describing one example of a method of operating an electrical energy generation system. As indicated in block 302, a fuel feed is supplied to an anode of a high temperature fuel cell and an oxidant is supplied to a cathode of the high temperature fuel cell, which is separated from the anode by an electrolyte, to cause electrochemical reactions within the fuel cell by which chemical energy in the fuel is converted into electrical energy. In some examples, the high temperature fuel cell may be a solid oxide fuel cell having a solid electrolyte layer. Various gaseous or liquid fuels may be supplied to the anode. In one example, the oxidant supplied to the cathode may be air.

As indicated in block 304, the fuel feed can subsequently be preheated using heat recovered from an anodic exhaust gas produced by the electrochemical reactions within the fuel cell. In some examples, the heat used to preheat the fuel feed may be recovered from the anodic exhaust gas using an anodic heat recovery subsystem that includes at least one anode side heat recovery exchanger located within a vertical chamber defined by an enclosure of a first heat exchanger unit. The first heat exchanger unit may have an inlet in fluid communication with an anode side outlet of the fuel cell.

As indicated in block 306, the oxidant can subsequently be preheated using heat recovered from a cathodic exhaust gas produced by the electrochemical reactions within the fuel cell. In some examples, the heat used to preheat the oxidant may be recovered from the cathodic exhaust gas using a cathodic heat recovery subsystem that includes at least one cathode side heat recovery exchanger located within a vertical chamber defined by an enclosure of a second heat exchanger unit. The second heat exchanger unit may have an inlet in fluid communication with a cathode side outlet of the fuel cell.

As indicated in block 308, a refrigerant stream may be generated by a vapor absorption and refrigeration device using, at least in part, heat transfer fluid heated by the heat recovered from the anodic exhaust gas and the cathodic exhaust gas. In some examples, the heat received and used by the vapor absorption and refrigeration device may be recovered by an anode side heat transfer fluid heating exchanger of the anodic heat recovery subsystem and a cathode side heat transfer fluid heating exchanger of the cathodic heat recovery subsystem.

As indicated in block 310, carbon dioxide present in the anodic exhaust gas can be captured and liquefied using a carbon capture system having a gas compression subsystem and a liquefaction subsystem. In some examples, the gas compression subsystem may include a compressor unit having a plurality of exhaust gas compressors, and a compression cooling unit having a plurality of cooling devices. In some examples, the exhaust gas compressors may be arranged to compress the anodic exhaust gas in stages, and the plurality of cooling devices may be used to cool the anodic exhaust gas during compression using the cooled refrigerant supplied by the vapor absorption and refrigeration device. In some examples, the liquefaction subsystem may include a refrigeration compressor unit having one or more compressors and a carbon dioxide condensing unit having a plurality of condensation cooling devices. In some examples, the one or more compressors can compress the refrigerant received from the vapor absorption and refrigeration device, and the plurality of condensation cooling devices can condense compressed gaseous carbon dioxide received from the gas compression subsystem into liquefied carbon dioxide by transferring heat from the compressed gaseous carbon dioxide to the cooled refrigerant. Transferring heat from the compressed gaseous carbon dioxide to the cooled refrigerant can lower the temperature of the compressed carbon dioxide until the compressed carbon dioxide condenses into a liquid.

The use of a VAR device integrated with a SOFC or equivalent high temperature fuel cell and exhaust gas heat recovery in an electrical energy generation system results in a compact and modular design, facilitates the availability of water for feeding back to the anode fuel feed by maximizing condensate recovery, can allow the system to operate independently without the need for any external cooling, and can increase the overall system efficiency. The lack of dependence on external cooling renders such systems ideal for offshore applications, as there is no need to use seawater for cooling. Likewise, the modularity of such systems facilitates their deployment in both new and retrofit applications.

System examples according to the present disclosure also operate with minimal pressure drop, which is beneficial given that most current developments in the area of high temperature fuel cells have been at lower pressures. Electrical energy generation systems integrating a VAR device with a SOFC or equivalent high temperature fuel cell and exhaust gas heat recovery are nonetheless also readily adaptable to high-pressure applications through which advantages in overall system performance and higher electrical energy output may be obtained.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. An electrical energy generation system comprising:
a fuel cell including an anode and a cathode separated by and each in contact with an electrolyte;
an anodic heat recovery subsystem usable to preheat a fuel feed supplied to the anode using heat recovered from an anodic exhaust gas produced by electrochemical reactions within the fuel cell;
a cathodic heat recovery subsystem usable to preheat an oxidant supplied to the cathode using heat recovered from a cathodic exhaust gas produced by electrochemical reactions within the fuel cell;
a vapor absorption and refrigeration device arranged to receive a heat transfer fluid heated by the heat recovered from the anodic exhaust gas and the cathodic exhaust gas and to generate a refrigerant stream at least in part by using heat from the heated heat transfer fluid; and
a carbon capture system for capturing and liquefying carbon dioxide present in the anodic exhaust gas, the carbon capture system including a gas compression subsystem and a liquefaction subsystem, at least the liquefaction subsystem arranged to use the refrigerant stream generated by the vapor absorption and refrigeration device to liquefy the carbon dioxide.

2. The electrical energy generation system of claim 1, wherein:
the fuel cell comprises a solid oxide fuel cell or a protonic ceramic fuel cell;
the fuel comprises a gas selected from hydrogen, carbon monoxide, methane, propane, butane, fermentation gases, gasified biomass, paint vapors, and a combination thereof, or a liquid selected from methanol, ethanol, diesel, and gasoline; and
the oxidant is air.

3. The electrical energy generation system of claim 1, wherein:
the anodic heat recovery subsystem includes at least one heat recovery exchanger and at least one heat transfer fluid heating exchanger arranged one above the other within a vertical chamber defined by an enclosure of a first heat exchanger unit having an inlet in fluid communication with an anode side outlet of the fuel cell;
the at least one heat recovery exchanger and the at least one heat transfer fluid heating exchanger are arranged for passage therethrough of a stream of the anodic exhaust gas;
heat from the anodic exhaust gas is transferable to the fuel feed by the at least one heat recovery exchanger; and
heat from the anodic exhaust gas is transferable to the heat transfer fluid by the at least one heat transfer fluid heating exchanger.

4. The electrical energy generation system of claim 3, further comprising a downstream heat exchanger interposed along an anodic exhaust gas flow path upstream of the gas compression subsystem of the carbon capture system and wherein:
the downstream heat exchanger is arranged to receive a water condensate from a water condensate separation vessel associated with the gas compression subsystem, and is usable to produce a water-steam mixture and to cool the anodic exhaust gas by transferring heat from the anodic exhaust gas to the water condensate;
the water-steam mixture is directable to the fuel feed at a point upstream of the first heat exchanger unit; and
the water is further heatable by the at least one heat transfer fluid heating exchanger of the first heat exchanger unit and is thereafter directable to the vapor absorption and refrigeration device.

5. The electrical energy generation system of claim 1, wherein:
the cathodic heat recovery subsystem includes at least one heat recovery exchanger and at least one heat transfer fluid heating exchanger arranged one above the other within a vertical chamber defined by an enclosure of a second heat exchanger unit having an inlet in fluid communication with a cathode side outlet of the fuel cell;
the at least one heat recovery exchanger and the at least one heat transfer fluid heating exchanger are arranged for passage therethrough of a stream of the cathodic exhaust gas;
heat from the cathodic exhaust gas is transferable to the oxidant by the at least one heat recovery exchanger; and
heat from the cathodic exhaust gas is transferable to the heat transfer fluid by the at least one heat transfer fluid heating exchanger.

6. The electrical energy generation system of claim 1, wherein:
the gas compression subsystem includes a compressor unit having a plurality of exhaust gas compressors, and a compression cooling unit having a plurality of cooling devices;
the exhaust gas compressors are arranged to compress the anodic exhaust gas in stages, and the anodic exhaust gas is coolable during compression thereof by the plurality of cooling devices using a refrigerant stream supplied by the vapor absorption and refrigeration device;
the liquefaction subsystem is arranged to receive a compressed gas flow from the gas compression subsystem and includes a refrigeration compressor unit having one or more compressors and a carbon dioxide condensing unit having a plurality of condensation cooling devices; and
the refrigerant received from the vapor absorption and refrigeration device is compressible by the one or more compressors, and compressed gaseous carbon dioxide is condensable into liquefied carbon dioxide by transferring heat from the compressed gaseous carbon dioxide to the refrigerant stream by the plurality of condensation cooling devices;
optionally, wherein:
a separator is interposed between the gas compression subsystem and the liquefaction subsystem; and
compressed gaseous carbon dioxide is separable by the separator from other gases in a compressed gas flow discharged from the gas compression subsystem, and the compressed gaseous carbon dioxide is thereafter directable to the liquefaction subsystem.

7. A system for decarbonizing an electrical energy generation system powered by a fuel cell, the system comprising:
a first heat exchanger unit having an inlet arranged for fluid communication with an anode side outlet of the fuel cell and including at least one anode side heat transfer fluid heating exchanger to heat a circulation of heat transfer fluid using heat recovered from an anodic exhaust gas produced by electrochemical reactions within the fuel cell;
a second heat exchanger unit having an inlet arranged for fluid communication with a cathode side outlet of the fuel cell and including at least one cathode side heat transfer fluid heating exchanger to heat the circulation of heat transfer fluid using heat recovered from a cathodic exhaust gas produced by the electrochemical reactions within the fuel cell;
a carbon capture system for capturing and liquefying carbon dioxide present in the anodic exhaust gas, the carbon capture system including a gas compression subsystem and a liquefaction subsystem; and
a vapor absorption and refrigeration device arranged to receive the circulation of heat transfer fluid heated by the anode side heat transfer fluid heating exchanger and the cathode side heat transfer fluid heating exchanger to generate a refrigerant stream using, at least in part, heat from the heated heat transfer fluid, and to circulate the refrigerant stream to at least the liquefaction subsystem of the carbon capture system;
optionally, further comprising a water-gas shift reactor located downstream of the anode side heat transfer fluid heating exchanger, the water-gas shift reactor positioned in a flow path of the anodic exhaust gas to convert carbon monoxide in the anodic exhaust gas to carbon dioxide.

8. The system of claim 7, further comprising a downstream heat exchanger interposed along an anodic exhaust gas flow path between the first heat exchanger unit and the gas compression subsystem of the carbon capture system and wherein:
the downstream heat exchanger is arranged to receive a water condensate from a water condensate separation vessel associated with the gas compression subsystem, and is usable to produce a water-steam mixture and to cool the anodic exhaust gas by transferring heat from the anodic exhaust gas to the water condensate;
the water-steam mixture is directable to a fuel feed that is suppliable to an anode side of the fuel cell; and
the water is further heatable by the at least one heat transfer fluid heating exchanger of the first heat exchanger unit and is thereafter directable to the vapor absorption and refrigeration device.

9. The system of claim 7, wherein the at least one anode side heat transfer fluid heating exchanger and the at least one cathode side heat transfer fluid heating exchanger are plate and frame type heat exchangers that are stacked within respective enclosures.

10. The system of claim 7, wherein:
the liquefaction subsystem is arranged to receive a compressed gas flow from the gas compression subsystem and includes a refrigeration compressor unit having one or more compressors and a carbon dioxide condensing unit having a plurality of condensation cooling devices;
the refrigerant stream received from the vapor absorption and refrigeration device is compressible by the one or more compressors; and
compressed gaseous carbon dioxide is condensable into liquefied carbon dioxide by transferring heat from the compressed gaseous carbon dioxide to the refrigerant stream by the plurality of condensation cooling devices;
optionally, wherein:
a separator is interposed between the gas compression subsystem and the liquefaction subsystem; and
compressed gaseous carbon dioxide is separable by the separator from other gases in a compressed gas flow discharged from the gas compression subsystem, and the compressed gaseous carbon dioxide is thereafter directable to the liquefaction subsystem.

11. A method of operating an electrical energy generation system comprising:
at a fuel cell having an anode and a cathode separated by and each in contact with an electrolyte, supplying a fuel feed to the anode and an oxidant to the cathode to cause electrochemical reactions within the fuel cell by which chemical energy in the fuel is converted into electrical energy;
subsequently preheating the fuel feed using heat recovered from an anodic exhaust gas produced by the electrochemical reactions within the fuel cell;
subsequently preheating the oxidant using heat recovered from a cathodic exhaust gas produced by the electrochemical reactions within the fuel cell;
generating a refrigerant stream, by a vapor absorption and refrigeration device using, at least in part, heat transfer fluid heated by the heat recovered from the anodic exhaust gas and the cathodic exhaust gas;
capturing and liquefying carbon dioxide present in the anodic exhaust gas using a carbon capture system having a gas compression subsystem and a liquefaction subsystem; and
wherein the gas compression subsystem compresses captured carbon dioxide, and the liquefaction subsystem receives at least a portion of the refrigerant stream from the vapor absorption and refrigeration device and uses the refrigerant stream to liquefy the carbon dioxide by lowering a temperature of the compressed carbon dioxide until the compressed carbon dioxide condenses into a liquid.

12. The method of claim 11, wherein the fuel feed is preheated by the heat recovered from the anodic exhaust gas to a temperature of 250 °C; and/or wherein
the heat transfer fluid is heated by the heat recovered from the anodic exhaust gas and the cathodic exhaust gas to a temperature of between 100 °C to 200 °C.

13. The method of claim 11, wherein:
the heat used to preheat the fuel feed is recovered from the anodic exhaust gas by passing the anodic exhaust gas through at least one heat recovery exchanger arranged within a vertical chamber defined by an enclosure of a first heat exchanger unit having an inlet in fluid communication with an anode side outlet of the fuel cell;
the heat used to preheat the oxidant is recovered from the cathodic exhaust gas by passing the cathodic exhaust gas through at least one heat recovery exchanger arranged within a vertical chamber defined by an enclosure of a second heat exchanger unit having an inlet in fluid communication with a cathode side outlet of the fuel cell; and
the heat used to heat the heat transfer fluid used by the vapor absorption and refrigeration device to cool the refrigerant is recovered by passing the anodic exhaust gas through at least one heat transfer fluid heating exchanger arranged within the vertical chamber of the first heat exchanger unit and by passing the cathodic exhaust gas through at least one heat transfer fluid heating exchanger arranged within the vertical chamber of the second heat exchanger unit.

14. The method of claim 13, further comprising:
receiving, at a downstream heat exchanger interposed along an anodic exhaust gas flow path upstream of the gas compression subsystem of the carbon capture system, a water condensate from a water condensate separation vessel associated with the gas compression subsystem;
producing a water-steam mixture from the water condensate and cooling the anodic exhaust gas by transferring heat from the anodic exhaust gas to the water condensate;
directing the cooled anodic exhaust to the gas compression subsystem;
directing the water-steam mixture to the fuel feed at a point upstream of the first heat exchanger unit; and
subsequently further heating the water in the at least one heat transfer fluid heating exchanger of the first heat exchanger unit using the heat recovered from the anodic exhaust gas, and directing the further heated water to the vapor absorption and refrigeration device.

15. The method of claim 11, wherein:
the anodic exhaust gas is compressed in stages by a plurality of exhaust gas compressors of a compressor unit of the gas compression subsystem;
the anodic exhaust gas is cooled during compression in the compressor unit by a plurality of cooling devices of a compression cooling unit of the gas compression subsystem using cooled refrigerant supplied by the vapor absorption and refrigeration device;
a stream of compressed gaseous carbon dioxide is discharged by the gas compression subsystem and received by the liquefaction subsystem; and
the compressed gaseous carbon dioxide is liquefied by the liquefaction subsystem by lowering the temperature of the compressed gaseous carbon dioxide via heat transfer to the cooled refrigerant received from the vapor absorption and refrigeration device;
optionally, wherein:
a separator is used to separate the compressed gaseous carbon dioxide from at least some amount of other gases discharged with the compressed gaseous carbon dioxide from the gas compression subsystem;
the compressed gaseous carbon dioxide is directed to the liquefaction subsystem; and
at least some of the other gases are introduced into the fuel feed.
